# EUROPEAN PATENT SPECIFICATION

(11) **EP 3 165 764 B1**
(45) Date of publication and mention of the grant of the patent: **07.04.2021**
(21) Application number: 15193484.1
(22) Date of filing: 06.11.2015
(51) Int. Cl.: F03D 7/02, F16D 55/228, F16D 125/06

(54) **YAW BRAKE FOR A WIND TURBINE**
AZIMUTBREMSE FÜR EINE WINDTURBINE
FREIN DE LACET POUR ÉOLIENNE

(43) Date of publication of application: 10.05.2017
(73) Proprietor: S.B. Patent Holding ApS, 5882 Vejstrup (DK)
(72) Inventor: Woods, James A. W., 5874 Hesselager (DK); Lang, Michael, 5771 Stenstrup (DK); Christensen, Niels, 5700 Svendborg (DK)
(74) Representative: Haseltine Lake Kempner LLP

(56) References cited:
- WO-A1-2013/092814
- US-A- 3 265 167
- US-A- 5 249 649
- US-A- 5 484 041

## Description

### FIELD OF THE INVENTION

This invention relates to yaw brakes used in wind turbines. In particular, the invention relates to a yaw brake having an actuating piston made from multiple materials including a deformable material that reduces noise and vibration during movement of the wind turbine and/or undesirable movement of the piston within the brake.

### BACKGROUND ART

In a conventional horizontal axis wind turbine, a tower extends vertically from the ground and a nacelle is disposed on top of the tower. The nacelle houses and supports the electricity generating components of the wind turbine including a rotor having a hub supported on a shaft that rotates about a substantially horizontal axis and one or more blades extending radially from the hub and a generator that generates electricity responsive to rotation of the shaft.

The nacelle is configured to rotate relative to the tower about a substantially vertical or yaw axis in order to orient the blades in the direction of the prevailing wind. Proper orientation of the nacelle is important to prevent uneven loads on the rotor and to maximize the efficiency of the wind turbine. Rotation of the nacelle relative to the tower is controlled by a yaw system. The yaw system may, for example, include a toothed ring that is fixed to the tower and a motor activated gear fixed to the nacelle and in mesh with the toothed ring such that activation of the motor results in rotation of the nacelle relative to the tower. Bearings may be interposed between the tower and nacelle to facilitate rotation of the nacelle relative to the tower. The yaw system may further include a brake disc that is fixed to the tower (e.g., as a part of the toothed ring) or nacelle and a plurality of yaw brakes that can engage the brake disc when partially applied to control and dampen movement of the nacelle about the yaw axis and when fully applied to fix the rotational position of the nacelle relative to the tower.

The yaw brakes typically include a caliper body defining jaws disposed on either side of the brake disc and one or more brake pads that are moved into and out of engagement with the brake disc by one or more pistons disposed with bores in the caliper body. The pistons are designed to move within the bores towards and away from the brake pads along an axis. During partial or full engagement of the brake pads with the brake disc, however, undesirable movement of the pistons can occur. In particular, the pistons may move sideways within the bore perpendicular to the intended axis of movement (i.e., translational movement along an axis perpendicular to the intended axis of movement) or may tilt relative to the axis (i.e. rotational movement along an axis perpendicular to the intended axis of movement). Sideways movement or tilting of the pistons can cause uneven loading and wear on seals between the piston and caliper body leading to leaking of actuating fluids. Sideways movement or tilting can also cause the piston to engage the walls of the caliper body defining the piston bores leading to abrasion of the piston. Although wear rings can be used to try and control movement of the piston, use of the rings increases the cost and complexity of the yaw brake. The pistons in conventional yaw brakes are also subject to fretting wear on the crown of the piston due to the relatively large loads encountered in wind turbines. Further still, conventional yaw brakes permit undesirable levels of noise and vibration during rotational movement of the nacelle relative to the tower. Attempts to address noise and vibration using different friction materials for the brake pads or using shims for the backing plate supporting the brake pads have had limited success.

The inventors herein have recognized a need for a yaw brake for a wind turbine that will reduce one or more of the above-identified deficiencies and/or provide improved performance.

WO 2013/092814 discloses a yaw brake having the pre-characterising features of claim 1 below.

### BRIEF SUMMARY OF THE INVENTION

This invention relates to a yaw brake for a wind turbine as set out in claim 1 below. In an arrangement, the yaw brake has an actuating piston made from multiple materials including a deformable material that reduces noise and vibration during movement of the wind turbine and/or undesirable movement of the piston within the brake.

A yaw brake in accordance with one embodiment includes a caliper body defining first and second jaws configured to be disposed on opposite sides of a brake disc disposed about a yaw axis. The caliper body defines a bore in one of the first and second jaws. The brake further includes a brake pad configured for movement relative to the caliper body between a first position in which the brake pad applies a first brake force to the brake disc and a second position in which the brake pad applies a second braking force to the brake disc. The second braking force is greater than the first braking force. The yaw brake further includes a piston disposed within the bore of the caliper body and configured for movement within the bore along a first axis to cause movement of the brake pad between the first position and the second position. The piston includes a body defining a crown facing the brake pad. The body is made from a first material. The piston further includes a deformable member configured for mounting on the body. The deformable member is made from a second material having a lower hardness than the first material and configured to assume a first form when the brake pad is in the first position and a second form when the brake pad is in the second position. The deformable member defines an end face facing the brake pad and nearer to the brake pad than the crown when the brake pad is in the first position.

A wind turbine in accordance with one embodiment includes a tower and a nacelle supported on the tower and configured for rotation relative to the tower about a yaw axis. The turbine further includes a rotor supported by the nacelle for rotation about a substantially horizontal axis. The rotor including a radially extending blade. The turbine further includes a brake disc coupled to one of the tower and the nacelle and a yaw brake. The yaw brake includes a caliper body defining first and second jaws configured to be disposed on opposite sides of a brake disc disposed about a yaw axis. The caliper body defines a bore in one of the first and second jaws. The brake further includes a brake pad configured for movement relative to the caliper body between a first position in which the brake pad applies a first brake force to the brake disc and a second position in which the brake pad applies a second braking force to the brake disc. The second braking force is greater than the first braking force. The yaw brake further includes a piston disposed within the bore of the caliper body and configured for movement within the bore along a first axis to cause movement of the brake pad between the first position and the second position. The piston includes a body defining a crown facing the brake pad. The body is made from a first material. The piston further includes a deformable member configured for mounting on the body. The deformable member is made from a second material having a lower hardness than the first material and configured to assume a first form when the brake pad is in the first position and a second form when the brake pad is in the second position. The deformable member defines an end face facing the brake pad and nearer to the brake pad than the crown when the brake pad is in the first position.

A yaw brake for a wind turbine in accordance with the invention represents an improvement as compared to conventional yaw brakes. By forming a portion of the piston from a deformable, softer material and by forming the piston in such a way that loads are transmitted through this material either instead of or before loads can be transmitted through the other, harder portion of the piston, one or more benefits are achieved. In particular, undesirable movement of the pistons within the piston bores of the brake may be reduced including sideways movement (i.e., translational movement along an axis perpendicular to the intended axis of movement of the piston) and tiling (i.e. rotational movement along an axis perpendicular to the intended axis of movement of the piston). As a result, uneven loading and wear on seals between the piston and caliper body (as well as leaking of actuating fluids) and abrasion on the pistons, is reduced. Fretting wear on the crown of the piston due to the relatively large loads encountered in wind turbines may also be reduced. Further, noise and vibration may be reduced during rotational movement of the nacelle relative to the tower.

The foregoing and other aspects, features, details, utilities, and advantages of the present invention will be apparent from reading the following description and claims, and from reviewing the accompanying drawings.

### BRIEF DESCRIPTION OF THE FIGURES

Figure 1 is a perspective view of a wind turbine.
Figure 2 is a schematic view of a portion of the wind turbine of Figure 1.
Figure 3 is a schematic view of a portion of a yaw system of the wind turbine of Figure 1.
Figure 4 is a perspective view of a yaw brake in accordance with one embodiment of the present teachings.
Figure 5 is an exploded view of a portion of the yaw brake of Figure 4.
Figure 6 is a perspective view of a portion of the yaw brake of Figure 4.
Figure 7 is a cross-sectional view of the portion of the yaw brake of Figure 6.
Figure 8 is a cross-sectional view of a portion of a yaw brake in accordance with another embodiment of the present teachings.

### DETAILED DESCRIPTION OF THE INVENTION

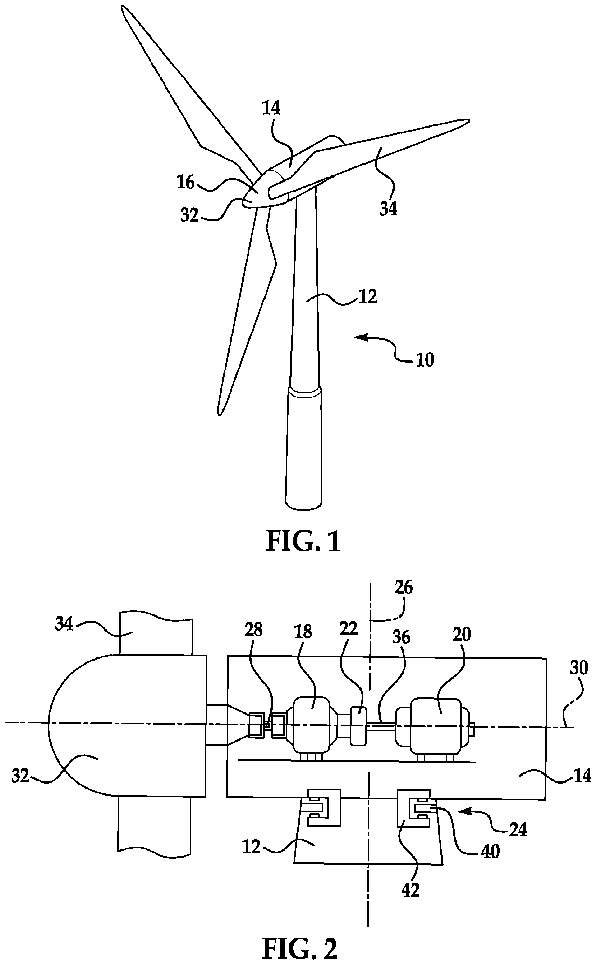

Referring now to the drawings wherein like reference numerals are used to identify identical components in the various views, Figures 1-2 illustrate a wind turbine 10 in accordance with one embodiment of the present invention. Turbine 10 is provided to convert wind energy to electrical energy. Turbine 10 comprises a horizontal axis wind turbine (HAWT). Turbine 10 may include a tower 12, a nacelle 14, a rotor 16, a gearbox 18, a generator 20, a brake 22 and a yaw system 24.

Tower 12 provides structural support for turbine 10 and is provided to locate rotor 16 in higher velocity winds further from the ground. In the illustrated embodiment, tower 12 comprises a freestanding tower that is supported by a foundation (not shown) and, in particular, a cylindrical monopole tower. It should be understood, however, that tower 12 may comprise other forms of freestanding towers such as a self-supporting lattice tower or towers that have support elements such as guy wires or buttresses including guyed lattice towers or tilt-up towers. Tower 12 may be made from rolled steel plates that are fastened together by welds or other fasteners. Tower 12 may include internal and external ladders and doors to allow access to components of turbine 10 on top of tower 12 including in nacelle 14.

Nacelle 14 houses and supports the electricity generating components of turbine 10 and provides a means for orienting rotor 16 relative to prevailing winds. Referring to Figure 2, nacelle 14 is configured to rotate relative to tower 12 about a vertical or yaw axis 26 extending longitudinally through tower 12.

Rotor 16 converts straight-line wind forces into torque used to rotate a shaft 28 about a substantially horizontal axis 30 (relative to earth ground). Rotor 16 includes a hub 32 coupled to the shaft 28 and one or more blades 34 extending radially outward from the hub 32. Straight-line winds cause blades 34--and therefore hub 32 and shaft 28--to rotate about axis 30.

Gearbox 18 is provided to translate the low speed, high torque rotation of shaft 28 into a high speed, low torque rotation of a shaft 36 extending into generator 20. Gearbox 18 may comprise, for example, a planetary gearbox, helical gearbox or worm gearbox. It should be understood that gearbox 18 may be eliminated and generator 20 may be driven directly by rotor 16 depending on the design of generator 20.

Generator 20 is provided to convert mechanical energy from the rotation of shaft 36 into electrical energy. Generator 20 may comprise an asynchronous machine and may be coupled to an electricity grid through conventional conductors.

Brake 22 is provided to reduce or halt rotation of shaft 36 during, for example, maintenance of turbine 10 or during periods with extremely strong winds to prevent damage to generator 20. Brake 22 may comprise a drum brake or a disc brake.

Yaw system 24 controls the rotational position of nacelle 14 relative to tower 12 in order to locate rotor 16 relative to prevailing winds. Referring to Figures 2-3, yaw system 24 may include a yaw drive 38, a brake disc 40, and a plurality of yaw brakes 42 in accordance with the present teachings. Yaw system 24 may also include a yaw bearing (not shown) such as a roller bearing or gliding bearing disposed between the tower 12 and nacelle 14.

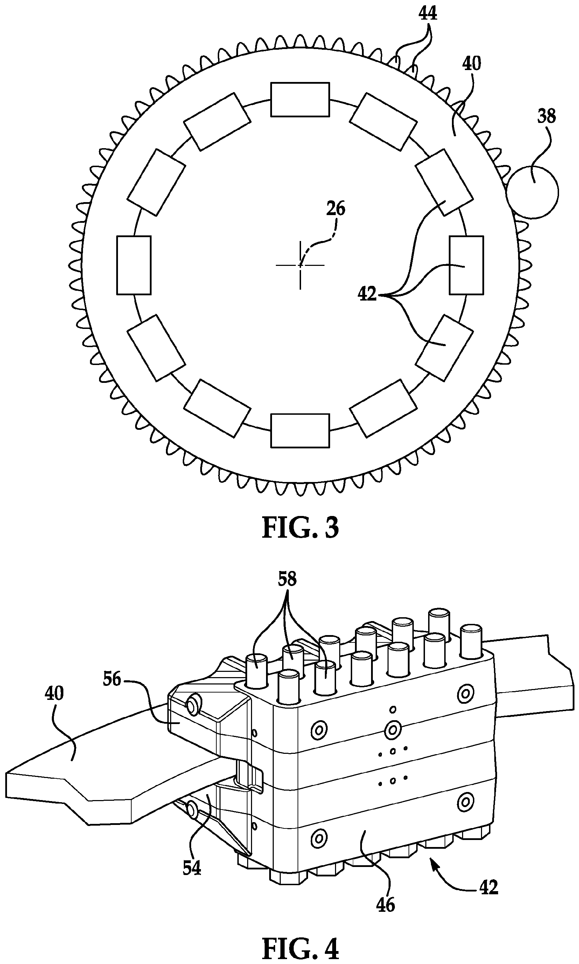

Referring to Figure 3, yaw drive 38 is provided to cause rotation of nacelle 14 relative to tower 12 about yaw axis 26. Drive 38 may be mounted on nacelle 14 and may include a motor, such as an alternating current motor, a gearbox configured to increase the output torque of the motor, and a gear that is driven by the motor and that has gear teeth configured to mesh with teeth 44 on a toothed ring affixed to tower 12. In the illustrated embodiment, the teeth 44 are formed on an outer periphery of brake disc 40. It should be understood, however, that the teeth 44 could be formed on a radially inner perimeter of brake disc 40 or that the toothed ring could be formed as an entirely separate structure from brake disc 40. Further, it should be understood that the relative positions of yaw drive 38 and the toothed ring could be reversed such that the toothed ring is mounted on nacelle 14 while the yaw drive is mounted on tower 12.

Brake disc 40 provides a braking surface that may be engaged by yaw brakes 42. In the illustrated embodiment, disc 40 also forms a toothed ring that may be engaged by yaw drive 38 to cause rotation of nacelle 14 relative to tower 12. Disc 40 is annular in shape and is mounted on tower 12 in the illustrated embodiment. Disc 40 is disposed about, and may be centered about, yaw axis 26.

Yaw brakes 42 are provided to control and dampen rotational movement of nacelle 14 relative to tower 12 during rotation of nacelle 14. Yaw brakes 42 are also provided to maintain nacelle 14 in a fixed rotational position relative to tower 12 once nacelle 14 has reached a desired position. Brakes 42 may be mounted on nacelle 14. It should be understood, however, that the relative positions of brake disc 40 and brakes 42 could be reversed such that the brake disc 40 is mounted on nacelle 14 while brakes 42 are mounted on tower 12. Brakes 42 may be disposed about the radially inner perimeter of disc 40 and circumferentially spaced from one another as shown in Figure 3. It should be understood, however, that brakes 42 may alternatively be disposed about the radially outer perimeter of disc 40 depending on the design of turbine 10.

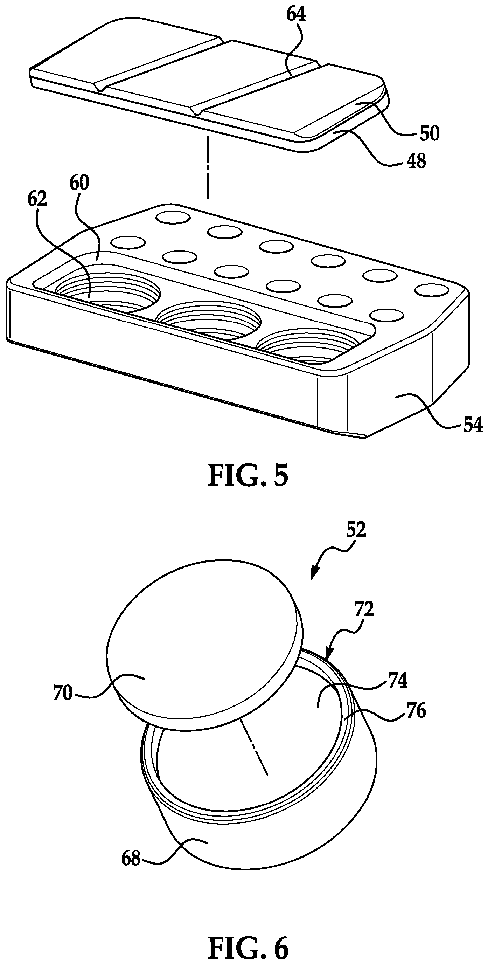

Referring now to Figures 4-7, a yaw brake 42 in accordance with one embodiment of the present teachings will be described. Brake 42 may include a caliper body 46, brake pad backing plates 48 (Figure 5), brake pads 50 (Figure 5) and one or more pistons 52 (Figures 6-7).

Caliper body 46 provides structural support for and orients the other components of brake 42. Referring to Figure 4, body 46 may define first and second jaws 54, 56 or yokes that are configured to be disposed on opposite sides of brake disc 40. The jaws 54, 56 may comprise separate structures that are coupled together using bolts 58 or other conventional fasteners and may also be fixed to nacelle 14 (or, alternatively to tower 12 where the brake disc 40 is fixed to nacelle 14). Referring to Figure 5, each jaw 54, 56 may define a recess 60 configured to receive plate 48 and pad 50 therein. Jaws 54, 56 may further define one or more bores 62 that open into recess 60 and are configured to receive pistons 52. In the illustrated embodiment, each jaw 54, 56 includes three bores 62 configured to house three pistons 52. It should be understood, however, that the number of bores 62 in each jaw 54, 56 may vary. Further, although jaws 54, 56 may have substantially the same shape and construction and may be mirror images of one another, jaws 54, 56 may alternatively have a different shape and construction. For example, in certain embodiments only one of jaws 54, 56 defines bores 62 for pistons 52 while the other jaw 54, 56 is configured with to support a sliding brake pad. Caliper body 46 further defines one or more fluid passageways (not shown) for delivery of fluid to, and removal of fluid from, bores 62 and may define a fluid connection connectable to a source of fluid. The fluid may be hydraulic or pneumatic.

Brake pad backing plate 48 is provided to support and orient brake pad 50 and provides a rigid surface against which pistons 52 may apply a force to cause movement of brake pad 50 into and out of engagement with brake disc 40. Backing plate 48 may be made from conventional metals and metal alloys or composite materials. In the illustrated embodiment backing plate 48 has a substantially rectangular shape. It should be understood, however, that the shape of plate 48 may vary. Backing plate 48 is disposed between brake pad 50 and pistons 52 and is configured to be received within recess 60 in such a manner that backing plate 48 and brake pad 50 are permitted to move towards and away from brake disc 40, but are prevented from movement in the rotational direction of brake disc 40.

Brake pad 50 is provided for frictional engagement with brake disc 40 in order to control and dampen rotational movement of nacelle 14 relative to tower 12 when brakes 42 are partially applied and in order to maintain nacelle 14 in a fixed position relative to tower 12 when brakes 42 are fully applied. Brake pad 50 may be made from conventional friction materials. In the illustrated embodiment, brake pad 50 has a substantially rectangular shape. It should be understood, however, that the shape of pad 50 may vary. Pad 50 may include one more grooves 64 formed therein for the purpose of removing debris from between the braking surfaces of pad 50 and disc 40. Brake pad 50 is configured for movement relative to caliper body 46 between a first, or partially applied, position when brake 42 is partially applied and a second, or fully applied, position when brake 42 is fully applied. In the partially applied position, brake pad 50 exerts a first braking force on brake disc 40 that permits controlled rotational movement of nacelle 14 relative to tower 12. In the fully applied position, brake pad 50 exerts a second braking force on brake disc 40 greater than the first braking force in order to fix the position of nacelle 14 relative to tower 12.

Referring to Figures 6-7, pistons 52 are provided to cause controlled movement of brake pad 50 between the partially and fully applied positions. Pistons 52 are disposed within bores 62 in caliper body 46 and configured for movement within the bore 62 along an axis 66 to cause movement of the brake pad 50 between the partially and fully applied positions. Movement of piston 52 within bore 62 may be controlled by changes in fluid pressure in bore 62 caused by delivery and removal of fluid from bore 62 on a side of piston 52 opposite the side that engages backing plate 48. Alternatively, pistons 52 may be moved within bore 62 using electromagnetic force. In fluid actuated embodiments, pistons 52 and/or bores 62 may be configured to receive seals (not shown) disposed between the piston 52 and walls of the bore 62 that prevent fluid from passing around the piston 52. In accordance with one aspect of the present teachings, piston 52 includes a body 68 and a deformable member 70 configured for mounting on body 68.

Body 68 may be substantially circular in shape and may be centered about axis 66. Body 68 may be made from a variety of materials including conventional metals and plastics. Body 68 defines a crown 72 at one axial end facing backing plate 48 and brake pad 50. Crown 72 may be shaped in such a way to define a recess 74 configured to receive member 70 and a rim 76 surrounding member 70. As a result, rim 76 retains member 70 and prevents crushing or extrusion of member 70 and reduces stress induced fatigue in member 70 when brake 42 is applied and piston 52 engages backing plate 48. Recess 74 and rim 76 may be circular in shape.

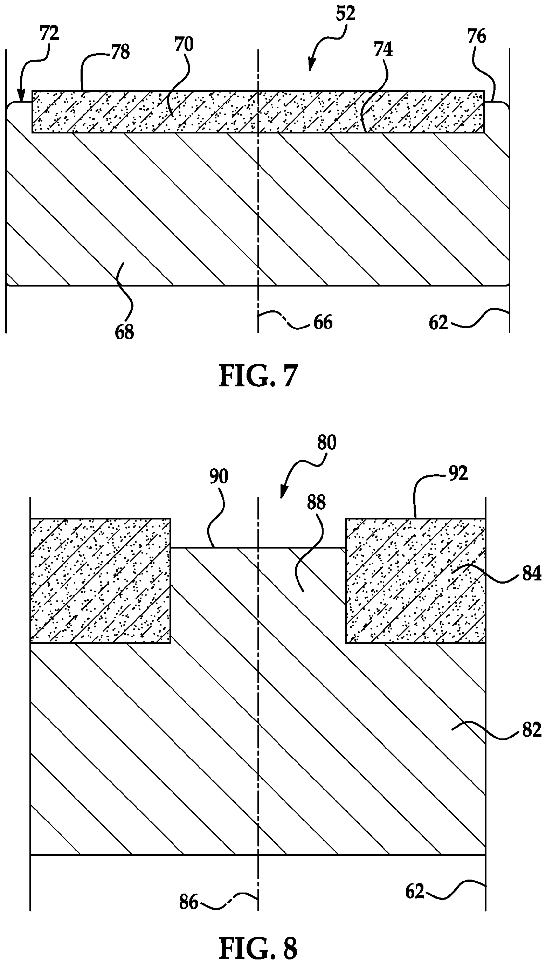

Deformable member 70 is provided to absorb loads resulting from engagement of brake pad 50 with brake disc 40 in order to reduce or eliminate undesirable movement of piston 52 within piston bore 62. Member 70 may also reduce fretting wear relative to conventional pistons and/or reduce noise and vibration during movement of nacelle 14 relative to tower 12. Member 70 is configured for mounting on body 68. In the illustrated embodiment, member 70 is circular in shape and is configured to be received within recess 74 in the crown 72 of body 68 with a radially outer surface of member 70 facing a radially inner surface of rim 76 in body 68. The axial length of member 70 is longer than the axial length of recess 74. As a result, an axial end face 78 of member 70 facing backing plate 48 and brake pad 50 is nearer to backing plate 48 and brake pad 50 than crown 72 of body 68 when brake 42 is partially applied and brake pad 50 is in the partially applied position as shown in Figure 7. Member 70 therefore contacts backing plate 48 before contact, if any, by crown 72 of body 68. During partial application of brake 42 (for use in controlling and dampening rotation of nacelle 14), the lack of contact between the backing plate 48 and crown 72 allows the brake pad 50 to move somewhat without unduly influencing the position of piston 52. During full application of brake 42 (to fix the position of nacelle 14 relative to tower 12), member 70 enables piston 52 to find a more stable position against backing plate 48.

In accordance with one aspect of the present teachings, member 70 is made from a material having a lower hardness than the material of body 68. Member 70 may be made from various polymeric materials including synthetic or natural materials. In one embodiment, member 70 is made from polyurethane. In other embodiments, member 70 may be made from rubber. The material of member 70 may be elastically deformable. Member 70 is configured to assume one form (a normal form) when brake 42 is partially applied and brake pad 50 is in the partially applied position and a second form when brake 42 is fully applied and brake pad 50 is in the fully applied position. Because member 70 is made from a softer material than body 68, member 70 deforms (e.g., through compression, shear and/or torsion) and absorbs loads resulting from the engagement of brake pad 50 with brake disc 40 including those that apply forces to piston 52 in directions other than parallel to axis 66. By absorbing these loads through deformation of member 70, off-axis movement of piston 52 (e.g., sideways or tilting movement within bore 62 along axes perpendicular to axis 66) is reduced or eliminated. As a result, uneven loading and wear on seals between the piston 52 and the walls of the piston bore 62 in fluid actuated brakes (as well as leaking of actuating fluids) and abrasion on the piston 52 is reduced. The deformation of member 70 also helps to reduce noise and vibration during relative rotation between nacelle 14 and tower 12. As noted above, member 70 is configured such that, during application of brake 42, member 70 contacts backing plate 48 before contact, if any, by crown 72 of body 68 with backing plate 48. Member 70 may be configured (e.g., by varying material composition and/or size) and/or crown 72 of body 68 may be configured (e.g., by varying the size of rim 76) in such a way that crown 72 contacts backing plate 48 after deformation of member 70 or in such a way that crown 72 does not come into contact with backing plate 48. In either case, the reduced surface contact between crown 72 and backing plate 68 reduces fretting wear relative to conventional pistons.

Referring now to Figure 8, another embodiment of a piston 80 for use in a yaw brake 42 in accordance with the present teachings is shown. Piston 80 is substantially similar to piston 52, but includes a body 82 and deformable member 84 that are configured differently than body 68 and member 70 of piston 52. Body 82 may again be substantially circular in shape and centered about an axis 86. However, body 82 defines a reduced diameter portion 88 at one axial end. This portion 88 forms a crown 90 facing backing plate 48 and brake pad 50. Member 84 is again configured for mounting on body 82, but may be annular in shape and configured to be disposed about portion 88 of body 82 such that member 84 surrounds crown 90 with a radially inner surface of member 84 facing a radially outer surface of body 82. The axial length of member 84 is again longer than the axial length of portion 88 of body 82 such that an axial end face 92 of member 84 facing backing plate 48 and brake pad 50 is nearer to backing plate 48 and brake pad 50 than crown 90 of body 82 when the brake is partially applied and the brake pad 50 is in the partially applied position as shown in Figure 8.

While the invention has been shown and described with reference to one or more particular embodiments thereof, it will be understood by those of skill in the art that various changes and modifications can be made without departing from the scope of the invention as defined by the appended claims.

## Claims

1. A yaw brake (42) for a wind turbine, comprising:
a caliper body (46) defining first and second jaws (54, 56) configured to be disposed on opposite sides of a brake disc (40) disposed about a yaw axis (26), the caliper body (46) defining a bore (62) in one of the first and second jaws (54, 56);
a brake pad (50) configured for movement relative to the caliper body (46) between a first position in which the brake pad (50) applies a first braking force to the brake disc (40) and a second position in which the brake pad (50) applies a second braking force to the brake disc (40), the second braking force greater than the first braking force; and,
a piston (52, 80) disposed within the bore (62) of the caliper body (46) and configured for movement within the bore (62) along a first axis (66, 86) to cause movement of the brake pad (50) between the first position and the second position and the piston (52, 80) includes a body (68, 82) defining a crown (72, 90) facing the brake pad (50), the body (68, 82) made from a first material; and,
a deformable member (70, 84) configured for mounting on the body (68, 82) **characterized in that** the deformable member (70 or 84) is radially aligned with the crown (72 or 90) of the body (68 or 82) and not disposed between the crown (72 or 90) and the brake pad (50) in the direction of the first axis (66 or 86), the deformable member (70, 84) is made from a second material having a lower hardness than the first material and configured to assume a first form when the brake pad (50) is in the first position and a second form when the brake pad (50) is in the second position, the deformable member (70, 84) defining an end face (78, 92) facing the brake pad (50) and nearer to the brake pad (50) than the crown (72, 90) when the brake pad (50) is in the first position.

2. The yaw brake (42) of claim 1 wherein the crown (72) defines a recess (74) configured to receive the deformable member (70).

3. The yaw brake (42) of claim 2 wherein the crown (72) defines a rim (76) surrounding the deformable member (70).

4. The yaw brake (42) of claim 3 wherein a radially outer surface of the deformable member (70) faces a radially inner surface of the rim (76).

5. The yaw brake (42) of any of claims 2-4, wherein an axial length of the deformable member (70) is larger than an axial length of the recess (74).

6. The yaw brake (42) of claim 1 wherein the deformable member (84) surrounds the crown (90).

7. The yaw brake (42) of claim 6, wherein the deformable member (84) surrounds a reduced diameter portion (88) of the body (82), and wherein an axial length of the deformable member (70) is larger than an axial length of the reduced diameter portion (88) of the body (82).

8. The yaw brake (42) of any of the preceding claims wherein the second material is elastically deformable.

9. The yaw brake (42) of any of the preceding claims wherein the second material comprises a polymeric material.

10. The yaw brake (42) of any of the preceding claims wherein the second material comprises polyurethane.

11. The yaw brake (42) of any of the preceding claims wherein the second material comprises rubber.

12. The yaw brake (42) of any of the preceding claims, further comprising a backing plate (48) disposed between the brake pad (50) and the piston (52, 80) and configured to support the brake pad (50) wherein the crown (72, 90) contacts the backing plate (48) when the brake pad (50) is in the second position.

13. The yaw brake (42) of any of the preceding claims, further comprising a backing plate (48) disposed between the brake pad (50) and the piston (52, 80) and configured to support the brake pad (50) wherein the crown (72, 90) does not contact the backing plate (48) when the brake pad (50) is in the second position.

14. The yaw brake (42) of any of the preceding claims, wherein the first form is a normal shape, and the second form is a deformed shape through compression, shear and/or torsion.

15. A wind turbine (10), comprising:
a tower (12);
a nacelle (14) supported on the tower (12) and configured for rotation relative to the tower (12) about a yaw axis (26);
a rotor (16) supported by the nacelle (14) for rotation about a substantially horizontal axis (30), the rotor (16) including a radially extending blade (34);
a brake disc (40) coupled to one of the tower (12) and the nacelle (14); and,
a yaw brake (42) according to any of the preceding claims.

## Patentansprüche

1. Gierbremse (42) für eine Windturbine, umfassend:
einen Bremssattelkörper (46), der eine erste und eine zweite Backe (54, 56) definiert, die konfiguriert sind, um auf gegenüberliegenden Seiten einer Bremsscheibe (40) angeordnet zu sein, die um eine Gierachse (26) angeordnet ist, wobei der Bremssattelkörper (46) eine Bohrung (62) in einer von der ersten und der zweiten Backe (54, 56) definiert;
einen Bremsbelag (50), der für eine Bewegung in Bezug auf den Bremssattelkörper (46) zwischen einer ersten Position, in der der Bremsbelag (50) eine erste Bremskraft auf die Bremsscheibe (40) ausübt, und einer zweiten Position, in der der Bremsbelag (50) eine zweite Bremskraft auf die Bremsscheibe (40) ausübt, konfiguriert ist, wobei die zweite Bremskraft größer ist als die erste Bremskraft; und,
einen Kolben (52, 80), der innerhalb der Bohrung (62) des Bremssattelkörpers (46) angeordnet und für eine Bewegung innerhalb der Bohrung (62) entlang einer ersten Achse (66, 86) konfiguriert ist, um eine Bewegung des Bremsbelages (50) zwischen der ersten Position und der zweiten Position zu bewirken, und wobei der Kolben (52, 80) einen Körper (68, 82) beinhaltet, der eine dem Bremsbelag (50) zugewandte Krone (72, 90) definiert, wobei der Körper (68, 82) aus einem ersten Material hergestellt ist; und,
ein verformbares Element (70, 84), das für eine Montage an dem Körper (68, 82) konfiguriert ist, **dadurch gekennzeichnet, dass** das verformbare Element (70 oder 84) radial mit der Krone (72 oder 90) des Körpers (68 oder 82) ausgerichtet ist und nicht zwischen der Krone (72 oder 90) und dem Bremsbelag (50) in der Richtung der ersten Achse (66 oder 86) angeordnet ist, wobei das verformbare Element (70, 84) aus einem zweiten Material hergestellt ist, das eine geringere Härte als das erste Material aufweist und konfiguriert ist, um eine erste Form anzunehmen, wenn der Bremsbelag (50) in der ersten Position ist, und eine zweite Form anzunehmen, wenn der Bremsbelag (50) in der zweiten Position ist, wobei das verformbare Element (70, 84) eine Endfläche (78, 92) definiert, die dem Bremsbelag (50) zugewandt ist und näher an dem Bremsbelag (50) ist als die Krone (72, 90), wenn der Bremsbelag (50) in der ersten Position ist.

2. Gierbremse (42) gemäß Anspruch 1, wobei die Krone (72) eine Aussparung (74) definiert, die konfiguriert ist, um das verformbare Element (70) aufzunehmen.

3. Gierbremse (42) gemäß Anspruch 2, wobei die Krone (72) einen Rand (76) definiert, der das verformbare Element (70) umgibt.

4. Gierbremse (42) gemäß Anspruch 3, wobei eine radial äußere Fläche des verformbaren Elements (70) einer radial inneren Oberfläche der Felge (76) zugewandt ist.

5. Gierbremse (42) gemäß einem der Ansprüche 2 bis 4, wobei eine axiale Länge des verformbaren Elements (70) größer ist als eine axiale Länge der Aussparung (74).

6. Gierbremse (42) gemäß Anspruch 1, wobei das verformbare Element (84) die Krone (90) umgibt.

7. Gierbremse (42) gemäß Anspruch 6, wobei das verformbare Element (84) einen Abschnitt (88) mit reduziertem Durchmesser des Körpers (82) umgibt, und wobei eine axiale Länge des verformbaren Elements (70) größer ist als eine axiale Länge des Abschnitts (88) mit reduziertem Durchmesser des Körpers (82).

8. Gierbremse (42) gemäß einem der vorherigen Ansprüche, wobei das zweite Material elastisch verformbar ist.

9. Gierbremse (42) gemäß einem der vorherigen Ansprüche, wobei das zweite Material ein polymeres Material umfasst.

10. Gierbremse (42) gemäß einem der vorherigen Ansprüche, wobei das zweite Material Polyurethan umfasst.

11. Gierbremse (42) gemäß einem der vorherigen Ansprüche, wobei das zweite Material Gummi umfasst.

12. Gierbremse (42) gemäß einem der vorherigen Ansprüche, ferner umfassend eine Rückenplatte (48), die zwischen dem Bremsbelag (50) und dem Kolben (52, 80) angeordnet und konfiguriert ist, um den Bremsbelag (50) zu tragen, wobei die Krone (72, 90) die Rückenplatte (48) berührt, wenn der Bremsbelag (50) in der zweiten Position ist.

13. Gierbremse (42) gemäß einem der vorherigen Ansprüche, ferner umfassend eine Rückenplatte (48), die zwischen dem Bremsbelag (50) und dem Kolben (52, 80) angeordnet und konfiguriert ist, um den Bremsbelag (50) zu tragen, wobei die Krone (72, 90) die Rückenplatte (48) nicht berührt, wenn der Bremsbelag (50) in der zweiten Position ist.

14. Gierbremse (42) gemäß einem der vorherigen Ansprüche, wobei die erste Form eine normale Form ist und die zweite Form eine durch Druck, Scherung und/oder Torsion verformte Form ist.

15. Windturbine (10), umfassend:
einen Turm (12),
eine Gondel (14), die auf dem Turm (12) getragen und für eine Drehung in Bezug auf den Turm (12) um eine Gierachse (26) konfiguriert ist;
einen Rotor (16), der von der Gondel (14) zur Drehung um eine im Wesentlichen horizontale Achse (30) getragen wird, wobei der Rotor (16) ein sich radial erstreckendes Blatt (34) beinhaltet;
eine Bremsscheibe (40), die mit einem von dem Turm (12) und der Gondel (14) gekoppelt ist; und
eine Gierbremse (42) gemäß einem der vorherigen Ansprüche.

## Revendications

1. Un frein de lacet (42) pour une éolienne, comprenant :
un corps d'étrier (46) définissant des première et deuxième mâchoires (54, 56) configurées pour être disposées sur les côtés opposés d'un disque de frein (40) disposé autour d'un axe de lacet (26), le corps d'étrier (46) définissant un alésage (62) dans l'une des première et deuxième mâchoires (54, 56) ;
une plaquette de frein (50) configurée pour se déplacer par rapport au corps d'étrier (46) entre une première position dans laquelle la plaquette de frein (50) applique une première force de freinage sur le disque de frein (40) et une deuxième position dans laquelle la plaquette de frein (50) applique une deuxième force de freinage sur le disque de frein (40), la deuxième force de freinage est supérieure à la première force de freinage ; et,
un piston (52, 80) disposé dans l'alésage (62) du corps d'étrier (46) et configuré pour se déplacer à l'intérieur de l'alésage (62) le long d'un premier axe (66, 86) pour provoquer le mouvement de la plaquette de frein (50) entre la première position et la deuxième position et le piston (52, 80) comprend un corps (68, 82) définissant une couronne (72, 90) faisant face à la plaquette de frein (50), le corps (68, 82) étant constitué à partir d'un premier matériau ; et,
un élément déformable (70, 84) configuré pour être monté sur le corps (68, 82) **caractérisé en ce que** l'élément déformable (70 ou 84) est aligné radialement avec la couronne (72 ou 90) du corps (68 ou 82) et non disposé entre la couronne (72 ou 90) et la plaquette de frein (50) dans la direction du premier axe (66 ou 86), l'élément déformable (70, 84) est constitué à partir d'un deuxième matériau présentant une dureté inférieure à celle du premier matériau et configuré pour prendre une première forme lorsque la plaquette de frein (50) est dans la première position et une deuxième forme lorsque la plaquette de frein (50) est dans la deuxième position, l'élément déformable (70, 84) définissant une face d'extrémité (78, 92) faisant face à la plaquette de frein (50) et plus proche de la plaquette de frein (50) que de la couronne (72, 90) lorsque la plaquette de frein (50) est dans la première position.

2. Le frein de lacet (42) selon la revendication 1 dans lequel la couronne (72) définit un évidement (74) configuré pour recevoir l'élément déformable (70).

3. Le frein de lacet (42) selon la revendication 2 dans lequel la couronne (72) définit une couronne dentée (76) entourant l'élément déformable (70).

4. Le frein de lacet (42) selon la revendication 3 dans lequel une surface radialement extérieure de l'élément déformable (70) fait face à une surface radialement intérieure de la couronne dentée (76).

5. Le frein de lacet (42) selon l'une quelconque des revendications 2 à 4, dans lequel une longueur axiale de l'élément déformable (70) est plus grande qu'une longueur axiale de l'évidement (74).

6. Le frein de lacet (42) selon la revendication 1 dans lequel l'élément déformable (84) entoure la couronne (90).

7. Le frein de lacet (42) selon la revendication 6, dans lequel l'élément déformable (84) entoure une partie de diamètre réduit (88) du corps (82), et dans lequel une longueur axiale de l'élément déformable (70) est plus grande qu'une longueur axiale de la partie de diamètre réduit (88) du corps (82).

8. Le frein de lacet (42) selon l'une quelconque des revendications précédentes dans lequel le deuxième matériau est élastiquement déformable.

9. Le frein de lacet (42) selon l'une quelconque des revendications précédentes dans lequel le deuxième matériau comprend un matériau polymère.

10. Le frein de lacet (42) selon l'une quelconque des revendications précédentes dans lequel le deuxième matériau comprend du polyuréthane.

11. Le frein de lacet (42) selon l'une quelconque des revendications précédentes dans lequel le deuxième matériau comprend du caoutchouc.

12. Le frein de lacet (42) selon l'une quelconque des revendications précédentes comprenant en outre une plaque d'appui (48) disposée entre la plaquette de frein (50) et le piston (52, 80) et configurée pour supporter la plaquette de frein (50) dans lequel la couronne (72, 90) entre en contact avec la plaque d'appui (48) lorsque la plaquette de frein (50) est dans la deuxième position.

13. Le frein de lacet (42) selon l'une quelconque des revendications précédentes comprenant en outre une plaque d'appui (48) disposée entre la plaquette de frein (50) et le piston (52, 80) et configurée pour supporter la plaquette de frein (50) dans lequel la couronne (72, 90) n'entre pas en contact avec la plaque d'appui (48) lorsque la plaquette de frein (50) est dans la deuxième position.

14. Le frein de lacet (42) selon l'une quelconque des revendications précédentes, dans lequel la première forme est une forme normale, et la deuxième forme est une forme déformée par compression, cisaillement et / ou torsion.

15. Une éolienne (10), comprenant :
une tour (12) ;
une nacelle (14) supportée sur la tour (12) et configurée pour tourner par rapport à la tour (12) autour d'un axe de lacet (26) ;
un rotor (16) supporté par la nacelle (14) pour une rotation autour d'un axe sensiblement horizontal (30), le rotor (16) comprenant une pale s'étendant radialement (34) ;
un disque de frein (40) couplé à une parmi la tour (12) et la nacelle (14) ; et,
un frein de lacet (42) selon l'une quelconque des revendications précédentes.
